# EUROPEAN PATENT SPECIFICATION

(11) **EP 1 788 287 B1**
(45) Date of publication and mention of the grant of the patent: **04.01.2012**
(21) Application number: 06024019.9
(22) Date of filing: 20.11.2006
(51) Int. Cl.: F16H 61/28, F16H 63/24

(54) **Automated manual transmission apparatus**
Automatisiertes Handschaltgetriebe
Boîte de vitesses robotisée

(30) Priority: 21.11.2005 JP 2005336051
(43) Date of publication of application: 23.05.2007
(73) Proprietor: AISIN AI Co., Ltd., Nishio-shi, Aichi-ken (JP)
(72) Inventor: KAMIYA Mitsutoshi c/o AISIN AI Co.Ltd., Nishio-shi, Aichi-ken (JP); MIYAZAKI Takeshige c/o AISIN AI Co.Ltd., Nishio-shi Aichi-ken (JP)
(74) Representative: Marshall, John Grahame

(56) References cited:
- EP-A2- 1 184 597
- WO-A2-2005/098269
- DE-B3- 10 304 588
- US-A- 5 503 039
- US-A1- 2004 211 277

## Description

### FIELD OF THE INVENTION

This invention generally relates to an automated manual transmission apparatus for a vehicle. More particularly, this invention pertains to an automated manual transmission apparatus by which a gear change operation time is reduced.

### BACKGROUND

There is a manually operated system as one of an operation system for a gearbox applied for a vehicle. A manual operation force, which is applied to a shift lever by a driver, is transmitted to gear trains in the gearbox and a gear change operation is performed. Recent developments have led to automated manual transmission apparatus. The automated manual transmission apparatus takes the benefits of the manually operated system, and selection of a shift stage is automated by use of an actuator. Generally, a gearbox (transmission) of such automated manual transmission apparatus, which has developed from only the manually operated system, includes multiple gear sets by which a predetermined gear ratio is established in the gearbox. A single gear set among the multiple gear sets is employed for selectively establishing a single shift stage. The gearbox further includes synchronizer mechanisms, each of which is shared by two gear sets and is selectively operated to be synchronized with one of the gear sets. The apparatus still further includes fork shafts, each of which actuates a corresponding synchronizer mechanism, and an inner lever which selects one of the fork shafts and operates the selected fork shaft. In general, the inner lever is driven both for a select operation, in which any of the fork shafts is selected, and for a shift operation, in which any of the gear sets is synchronized with a corresponding synchronizer mechanism.

In conventional automated manual transmissions, a gear change operation includes three elements: an unshift operation, a select operation and a shift operation. Upon the unshift operation, the inner lever is released from a fork shaft of a shift stage, which is being selected. The fork shaft is returned from a position, at which a sleeve of the corresponding synchronizer mechanism is mated with a gear set, to a position, at which the sleeve is disengaged from the cone of the gear set and the gear set rotates idly. Upon the select operation, the inner lever moves to a position, at which the inner lever is engaged with a fork shaft for a different shift stage, at neutral. Upon the shift operation, the inner lever is moved in a shift direction for establishing the shift stage, wherein a gear set for the shift stage is rotated in a synchronic manner with the corresponding synchronizer mechanism.

For example as disclosed in JP2004-176894A, the aforementioned three elements of the gear change operation are usually performed by use of a shift and select shaft and an inner lever. That is, one of the axial movement and the rotation of the shift and select shaft is employed to select a fork shaft and the other one is employed to operate or move the fork shaft. Therefore, there is no concern about the double engagement in which plural gear sets, each of which has a unique gear change ratio, are engaged at the same time.

Meanwhile, in a transmission apparatus with a shift and select shaft and an inner lever, an unshift operation, a select operation and a shift operation are performed in a time sequence. Therefore, this may take time to complete a gear change operation and may cause coast conditions due to temporary loss of driving force to be transmitted.

US2004/211277 discloses an automated manual transmission having the features of the pre-characterizing clause of claim 1 herein. However a need exists for an automated manual transmission apparatus in which a gear change operation time is further reduced compared to conventional ones.

### SUMMARY OF THE INVENTION

According to an aspect of the present invention, an automated manual transmission apparatus is characterized including: a first shaft selectively operated for an unshift operation or a shift operation of a first shift stage; a second shaft selectively operated for an unshift operation or a shift operation of a second shift stage; a first driving means for driving the first shaft; a second driving means for driving the second shaft; controlling means for controlling the first and second driving means simultaneously so that the unshift operation of the first shift stage is performed in parallel with the shift operation of the second shift stage.

It is preferable that an automated manual transmission apparatus further includes a gearbox in which the first or second shift stage is selectively achieved. The gear box has a first gear set having a first drive gear and a first driven gear; a second gear set having a second drive gear and a second driven gear; a first engagement member disengaged from the first drive gear during the unshift operation of the first shift stage so that the first drive gear rotates idly or engaged with the first drive gear during the shift operation of the second shift stage; a second engagement member disengaged from the second drive gear during the unshift operation of the second shift stage so that the second drive gear rotates idly or engaged with the second drive gear during the shift operation of the second shift stage; the first shaft being a first fork shaft provided for the first gear set; the second shaft being a second fork shaft provided for the second gear set; the first driving means including a first lever and a first actuator for driving the first fork shaft; and the second driving means including a second lever and a second actuator for driving the second fork shaft.

As described above, a principal point is to perform an unshift operation and a shift operation, which had been performed in a time sequence, in parallel, wherein a gear change operation time is widely shortened. The automated manual transmission apparatus includes the plural shafts operated for unshift and shift operations of the shift stages and the plural driving means for driving the shafts. The plural driving means operate independently and are controlled independently. For example, when a fork shaft is shared by two gear sets in a synchromesh-type transmission, each fork shaft can be provided with a lever and an actuator. Therefore, the first fork shaft for an unshift operation and the second fork shaft for a shift operation are operated simultaneously.

When the unshift operation of the first shift stage and the shift operation of the second shift stage are performed in parallel, double engagement may occur, in which the first and second shift stages are engaged with the corresponding engagement member (engagement states) at the same time, or in which the first and second shift stages are frictionally engaged therewith (frictionally engagement states). In such circumstances, driving power may be transmitted via two gear-meshed portions. When the two gear sets, each of which has a unique gear change ratio, are at the engagement states at the same time, the gear sets may be damaged due to the difference in revolutions per minutes and the gearbox may not function properly. The frictional engagement at the two gear-meshed portions may not damage gears, but the gear portions associated with the frictional engagement are worn out rapidly and the life-time thereof could be shortened. In order to prevent these matters, it is necessary to control appropriately the parallel operation of an unshift operation and a shift operation while observing the progresses of the unshfit operation and the shift operation.

It is preferable that the controlling means includes an unshift detecting portion detecting a progress of the unshift operation of the first shift stage and/or a shift detecting portion detecting a progress of the shift operation of the second shift stage. Further it is still preferable that the progress of the unshift operation of the first shift stage and the progress of the shift operation of the second shift stage are each one of an operation elapsed time; a shaft stroke position; a shaft moving speed; an estimated time for each shaft to reach a predetermined position and an input to each actuator or a combination thereof.

In order to observe the progresses of the unshift and shift operations, it is possible to be provided with detecting portions for indicators respectively. For example, the apparatus can be provided with a clock for timing the controlling means to detect the operation elapsed time; a stroke sensor for detecting a stroke position of the shaft, and so on. A moving speed of the shaft can be obtained by differentiating stroke positions detected on a periodic basis. An estimated time for a shaft to reach a position is obtained on the basis of the rest of stroke length and the moving speed of the shaft.

The controlling means controls inputs to each actuator on the basis of control data stored therein. The actuator can be a hydraulic-type or an electrically driven-type one , and the information such as hydraulic pressure or electric voltage or current of the actuator can be detected by a sensor. Actually measured values, which represent past inputs to the actuator, or predetermined control values are factors for determining the stroke position and the moving speed of the shaft.

Naturally, there is no need to detect all indicators for the unshift and shift operations. It is preferable that each indicator is detected individually or in combination corresponding to each control method.

It is preferable that the controlling means refers to the progress of the unshift operation and refers to the progress of the shift operation as needed. The controlling means commences the shift operation prior to a time in which the first gear set turns to an idling state.

For example, a gear change operation includes an unshift operation and a shift operation. In the unshift operation, the first gear set of the first shift stage is released from an engagement state and the first shaft moves to a neutral position. In the shift operation, the second shaft starts moving from the neutral position toward the position of the second shift stage, and the second gear set starts frictionally engaging with the second synchronizer mechanism. Finally, the second gear set is moved from the frictionally engagement state to the engagement state. Here, even if such parallel operation is performed, i.e., even if the shift operation for the second shift stage is performed prior to the first gear set turns to the idling state, interference with its operation does not occur immediately. This is because it needs a time for moving the second shaft by a certain stroke length before the start of the frictional engagement of the second gear set. If the first gear set of the first shift stage is released from the engagement state while the second shaft is moving at a certain stroke length, double engagement does not occur. Further, interference with its operation does not occur even when the second gear set for the second shift stage turns to the frictional engagement state, at or after the first gear set for the first shift stage turns to the idling state.

One of the principles of the present invention is to start the frictional engagement of the second gear set for the second shift stage immediately after releasing the first gear set for the first shift stage from the engagement state. However, there are possible fluctuations in times required for unshift and shift operations so that it is preferable to control the unshift and shift operations with a certain margin time. Only occasionally, frictional engagements of the first gear set and the second gear set may both occur at the same time for a short time. In this case, the gearbox is not damaged immediately so that such damage is tolerated. However, double engagement, in which both the first and second gear sets are at the engagement state at the same time, needs to be avoided. In order to prevent double engagement, it is preferable that an interlock mechanism is provided, by which a gear set for other shift stage is allowed to be in the frictional engagement state but not allowed to be in the engagement state.

The controlling means can initiate the shift operation of the second shift stage when the stroke position of the first shaft for the first shift stage reaches a prescribed position. One of the specific methods is a method of controlling based upon a stroke position.

The characteristics of an unshift operation and a shift operation are expressed with a stroke curve which is depicted based upon a horizontal axis for an operation elapsed time and a vertical axis for a stroke position. Variable factors such as a shift stage difference, an ambient temperature, and fluctuations at operations are referred to as parameters and are employed to change the position of the stroke curve. The prescribed potion of the shaft is obtained based upon the stroke curve. That is, referring to the stroke curve for the shift operation, a time T1 from the shift operation starting time to the frictional engagement starting time is obtained. Next, referring to the stroke curve for the unshift operation, a position S2, at which the shaft is positioned backing from the frictional engagement end time by the time T1, is determined as a prescribed position.

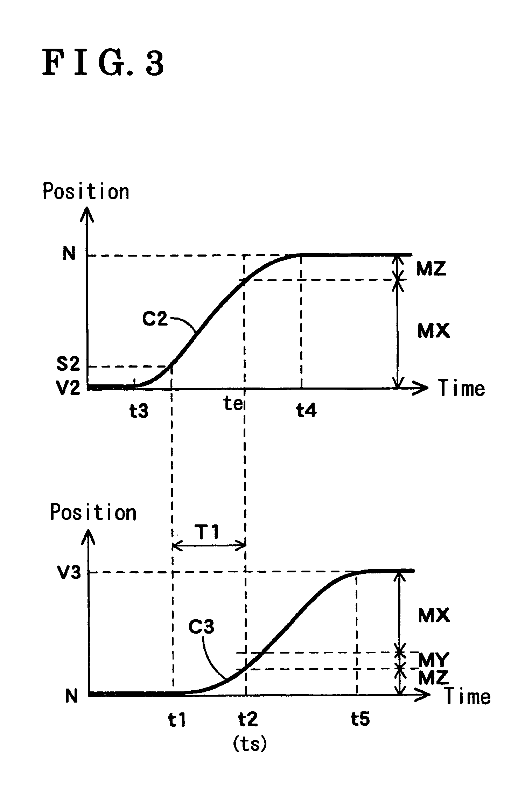

Explaining from the beginning, first, an unshift operation is performed and a stroke position of a shaft is detected as an indicator of a progress. When the shaft reaches the prescribed position S2, the shift operation of the second shaft is started. At or later than that, the unshift operation and the shift operation progress in parallel. In the time T1, i.e., for example at the time point t2 in Fig. 3, the first gear set for the unshift operation is released from the engagement state and the second gear set for the shift operation turns to the frictionally engagement state. At last, the second gear set for the shift operation is engaged with the second engagement member, wherein the gear change operation is completed. Practically, a margin time is added in consideration with actual fluctuations so as to start a shift operation.

The controlling means can initiate the shift operation of the second shift stage when the operation elapsed time for the unshift operation of the first shift stage reaches a prescribed time. Another one of the specific methods is a method of controlling based upon an operation elapsed time. Likewise as the control based upon a stroke position of a shaft, it is possible to obtain a prescribed operation elapsed time based upon a stroke curve. First, a time T1, which is required from the shift operation starting time to the frictional engagement starting time, is obtained. Next, a time T3, which is required from the unshift operation starting time to a timing at which the gear set of the unshift operation is released from the engagement state, is obtained. A time T4, which is obtained by subtracting the time T1 from the time T3, is determined as a prescribed time (T4=T3-T1).

Explaining from the beginning, first, an unshift operation is performed and an operation elapsed time is detected as an indication of a progress. When a shift operation is started in the prescribed time T4, the unshift operation and the shift operation are performed in parallel at or later than that. In the time T1, the time T3 elapses at the unshift operation side, wherein the first gear set is released from the engagement state. At the same time, the second gear set for the shift operation is frictionally engaged. At last, the second gear set for the shift operation is engaged with the engagement member, wherein the gear change operation is completed.

Next, described below is a method of enhancing control precision. The above-described control based upon a stroke position or an operation elapsed time is performed in the same manner every time. That is, those controls are not reflected with influences of variable factors or fluctuations in actual operations. Therefore, control precision is enhanced by detecting actual progresses during a gear change operation and by performing a control appropriate to the situation. That is, during the unshift operation of the first shift stage, the controlling means obtains an estimated time required to the shaft to reach a position, based upon stroke positions and operating speeds of the shaft and inputs to the actuator. When the estimated time required to the shaft to reach a position turns to a value equal to or less than a predetermined time of the shift operation, the shift operation of the second gear set can be started.

According to the method of controlling a gear change operation based upon an estimated time required to the shaft to reach a position, a start timing of a shift operation is estimated while obtaining the estimated time required to the shaft to reach a position in real time at or after the start of the unshift operation every gear change operation. That is, because the estimated time required to the shaft to reach a position becomes longer when the movement of the shaft is slower than the normal speed, the start timing of the shift operation is controlled to be delayed. On the other hand, when the movement of the shaft is faster, the estimated time required to the shaft to reach a position is shortened, wherein a start timing of a shift operation is accelerated.

The controlling means can include a temperature detecting portion detecting a temperature relevant to a gear change operation and refer to the detected temperature as a progress of each operation. It is preferable that the temperature is any of an engine coolant temperature; an engine room ambient temperature and a transmission inside temperature.

The stroke curve of the shaft is influenced by an ambient temperature. Therefore, the stroke curve is corrected with reference to a relevant ambient temperature and the control of a gear change operation is performed more precisely. The temperature detecting portion can be a newly provided temperature sensor or a temperature sensor which is conventionally mounted on a vehicle. The controlling means can refer to measured data. In general, viscosity of lubricant at a relatively low temperature becomes higher and a sliding resistance of a bearing is increased. Therefore, a time required for an unshift operation and a shift operation is extended. On the other hand, at a relatively high temperature, a time required is likely to decrease. Such temperature characteristics can be in advance obtained quantitatively every vehicle application and can be stored in the controlling means as control data which is called for example a map.

The controlling means can refer to the progress at or after a shift operation start time and feedback-control the driving means. Such feedback-control is effective so as to further enhance the control precision. For example, while an unshift operation and a shift operation are being implemented in parallel, it is possible to continuously detect stroke positions and moving speeds of the shafts and inputs to the actuators. In such cases, it is possible to predict a synchronic engagement end time te for an unshift operation and a frictional engagement start time ts for a shift operation at any time and to see if the time te is equal to or smaller than the time ts (te≦ts). As a comparison result, in a case where the operation speeed of either the unshift or shift operation needs to be slower, the speed can be slowed down by reducing an input to the actuator. After this control, feedback-controlling can be performed by detecting the actuator input again and by comparing the times te and ts, wherein the input to the actuator can be controlled again in real time.

The controlling means can compute statistically the progresses of the unshift operation and the shift operation and estimate fluctuations in times required for the unshift operation and the shift operation, wherein the control performance is enhanced automatically. A method of estimating with higher precision by learning fluctuations in required times, can be employed for the purpose of further enhancing the control precision. In this method, the progresses of the actual gear change operation are measured and proceeded statistically, wherein high control precision is achieved corresponding to each vehicle. Such statistic process can be implemented for example by an ECU serving as controlling means.

As described above, there are, as a method of enhancing control precision, a method based upon a relevant temperature, a method based upon a feedback-control, and a method learning statistically. Each method can be modified or can be combined with other methods. Further, the present invention is suitable for an automated manual transmission apparatus having synchronizer mechanisms and fork shafts. However, the application of the present invention is not limited. For example, each shift stage can be provided with a fork shaft, a driving means such as an actuator.

The automated manual transmission apparatus described above is provided with plural shafts and driving means, which perform a unshift operation and a shift operation of shift stages. Controlling means controls any or all of the plural driving means at the same time so that an unshift operation of a first shift stage and a shift operation of a second shift stage are performed in parallel. The controlling means detects and refers to progresses of the unshift operation and the shift operation and starts the shift operation of a second shift stage prior to a time in which the first gear set turns to an idling state. Therefore, double engagement, in which driving power is transmitted via two portions, does not occur and it is possible to widely reduce a gear change operation time.

Further, according to the methods of controlling a gear change operation based upon a temperature, controlling such driving means based upon a feedback control, actually measuring progresses during a gear change operation and computing the progresses statistically, a control of a gear change operation is performed with improved control precision.

### BRIEF DESCRIPTION OF THE DRAWINGS

The foregoing and additional features and characteristics of the present invention will become more apparent from the following detailed description considered with reference to the accompanying drawings, wherein:

Fig. 1 is a view for explaining an automated manual transmission apparatus according to an embodiment of the present invention;

Figs. 2A-2D explain a gear change operation in a time sequence according to a conventional automated manual transmission apparatus, Fig. 2A is a view illustrating a state prior to the gear change operation and an unshift operation, Fig. 2B is a view illustrating a select operation, Fig. 2C is a view illustrating a shift operation, and Fig. 2D is a view illustrating a state after the gear change operation;

Figs. 3A and 3B are diagrams for explaining a method of controlling a gear change operation based upon a stroke position;

Figs. 4A and 4B are diagrams for explaining another method of controlling a gear change operation based upon an operation elapsed time;

Figs. 5A and 5B are diagrams for explaining another method of controlling a gear change operation with stroke curves with a range or width in consideration of operation time fluctuations;

Figs. 6A and 6B are diagrams for explaining another method of controlling a gear change operation with an estimated time required for arrival; and

Fig. 7 is a diagram for explaining a conventional method of controlling a gear change operation.

### DETAILED DESCRIPTION

An embodiment of the present invention is explained with reference to the attached drawing figures.

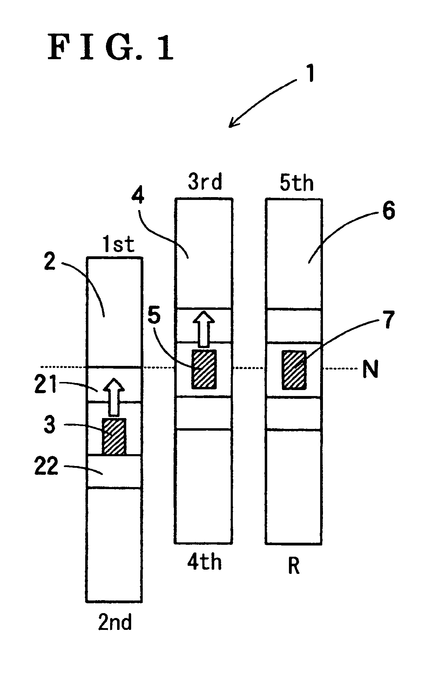

Fig. 1 is a view for explaining an automated manual transmission apparatus according to the embodiment of the present invention. An automated manual transmission apparatus 1 includes a synchromesh-type transmission which is capable of establishing any of five forward shift stages and a reverse shift stages. The automated manual transmission apparatus 1 further includes: a fork shaft 2 (first/second shaft) and a lever 3 for the first and second shift stages (first/second shift stage); a fork shaft 4 (first/second shaft) and a lever 5 for the third and fourth shift stages (first/second shift stage); a fork shaft 6 (first/second shaft) and a lever 7 for the fifth and reverse shift stages (first/second shift stage); synchronizer mechanisms (first/second engagement member) operatively associated with the fork shafts 2, 4 and 6 respectively; gear sets selectively engaged with each corresponding synchronizer mechanisms so as to establish a shift stage; actuators for actuating the levers 3, 5 and 7 respectively; and a transmission electronic control unit (ECU) serving as controlling means.

The 1st-2nd shift stage fork shaft 2 (first shaft) is an axial member which is movable in an up-and-down direction in Fig. 1 for a shift operation. The 1st-2nd shift stage fork shaft 2 is connected to the 1st-2nd shift stage synchronizer mechanism (first engagement member). When the 1st-2nd shift stage fork shaft 2 is moved in the down direction in Fig. 1, the corresponding gear set (first gear set), which is not illustrated, is engaged with the 1st-2nd shift stage synchronizer mechanism and is rotated in synchronic manner therewith. When the 1st-2nd shift stage fork shaft 2 is not moved in both axial directions and is located at an axially intermediate position, the 1st-2nd shift stage fork shaft 2 is positioned at a neutral position N in which any shift stages is not selected. As being widely known, upon a synchronic engagement by the synchronizer mechanism, a frictional engagement between a synchronizer ring and a gear set is implemented, wherein a rotational speed of a driven side is synchronized with a rotational speed of a drive side. Next, a sleeve of the synchronizer mechanism is mated with a gear set, and the gear set, which has been rotated idly, is rotated in synchronic manner with the synchronizer mechanism so as to transmit driving force.

The 1st-2nd shift stage fork shaft 2 is provided with two shift heads 21 and 22 at an approximately intermediate in the axial direction. The 1st-2nd lever 3 is operatively interposed between the two shift heads 21 and 22. The 1st-2nd lever 3 is connected to the non-illustrated the 1st-2nd actuator. The 1st-2nd actuator actuates the 1st-2nd lever 3 to move in the up or down direction in Fig. 1 so that the 1st-2nd shift stage fork shaft 2 is driven. While thelst-2nd shift stage fork shaft 2 is being driven, an unshift operation or a shift operation is performed.

The 3rd-4th shift stage fork shaft 4 is aligned with and is positioned adjacent to the 1st-2nd shift stage fork shaft 2. The 3rd-4th shift stage fork shaft 4 and the 3rd-4th lever 5 are structured approximately in the same as the 1st-2nd shift stage fork shaft 2 and the 1st-2nd shift stage lever 3, respectively. Likewise, the 5th-R shift stage fork shaft 6 and the 5th-R shift stage lever 7 are structured approximately in the same thereas, respectively. That is, the automated manual transmission apparatus 1 includes the three fork shafts 2, 4 and 6, the three levers 3, 5 and 7 and the three actuators. The three levers and actuators serve as driving means.

The ECU, which serves as the controlling means, controls inputs to the actuators and implements a gear change operation. The ECU incorporates, therein, a microcomputer and controls based upon control programs and control data which are stored inside. The ECU is inputted with information from various sensors mounted on a vehicle, such as vehicle driving speed, revolutions per minute data of each component, temperature and so on, and computes as needed. As a result, the ECU obtains an amount and a timing of each input to each actuator and controls each component. The ECU enables not only an independent control of the actuators but also a parallel control of any of the actuators.

Fig. 1 illustrates the automatic manual transmission apparatus 1 at the state of the second shift stage established. The two arrows in Fig. 1 denote a possible gear change operation from the second shift stage to the third shift stage. That is, Fig. 1 illustrates that the unshift operation of the 1st-2nd shift stage lever 3 from the second shift stage is implemented in parallel with the shift operation to the 3rd-4th shift stage lever 5.

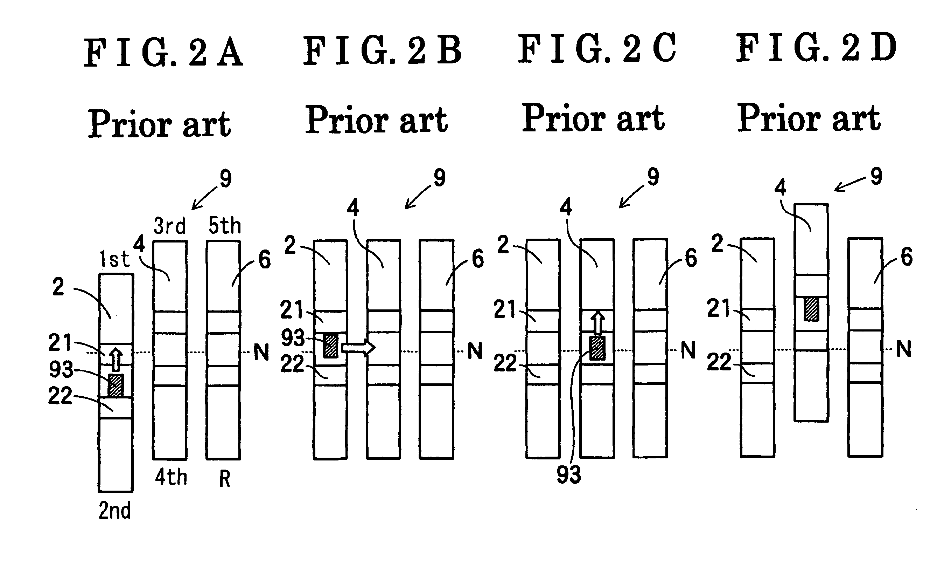

Fig. 2 illustrates a structure of a conventional automated manual transmission apparatus 9 and a gear change operation thereof. The conventional automated manual transmission apparatus 9 includes three fork shafts 92, 94 and 96 and an inner lever 93. An actuator moves the inner lever 93 in the up-and-down direction in Fig. 2 for an unshift and shift operation, which is identical to the embodiment of the present invention. The singular inner lever 93 is provided and is movable in a right-and-left direction in Fig. 2 at neutral N over the fork shafts 92, 94 and 96 for a select operation.

Figs. 2A-2D explains a gear change operation in the conventional automated manual transmission 9 in a time sequence. Fig. 2A explains an unshift operation from the second shift stage. The inner lever 93 is actuated by the actuator and the 1 st-2nd shift stage fork shaft 92 is moved from the position for the 2nd shift stage to the neutral position N. In Fig. 2B, a select operation is performed, in which the inner lever 93, which is placed at the neutral N, is moved from the 1st-2nd shift stage fork shaft 92 to the 3rd-4th shift stage fork shaft 94. In Fig. 2C, the inner lever 93 is driven so as to move the 3rd-4th shift stage fork shaft 94 from the neutral N to the position for the 3rd shift stage. Fig. 2D illustrates a state in which the gear change operation has been completed with the third shift stage established.

As described above, in the automated manual transmission apparatus 9, an unshift operation, a select operation and a shift operation are performed in a time sequence by the single inner lever 93.

On the other hand, according to the embodiment of the present invention, any of the three levers 3, 5 and 7 are operated in parallel.

Next, described below are various methods of controlling a gear change operation by the ECU. A gear change operation from the 2nd shift stage to the 3rd shift stage is taken as an example, and gear change operations of other shift stages are implemented in the same manner with different reference numerals in the drawing figures, so that the explanation thereof will be omitted herein.

Figs. 3A and 3B explain a method of controlling a gear change operation on the basis of a stroke position of a fork shaft. Fig. 3A illustrates a stroke curve C2 representing a position of the 1 st and 2nd shift stage fork shaft 2 within a range between the position V2 for the 2nd shift stage and the neutral position N. Fig. 3B illustrates a stroke curve C3 representing a position of the 3rd and 4th shift stage fork shaft 4 within a range between the neutral position N and the position V3 for the 3rd shift stage. Each stroke curve C2 and C3 is determined by implemented an unshift operation or a shift operation in advance. The horizontal axis of each diagram represents an operation elapsed time and the vertical axis thereof represents a position of the fork shaft 2 or 4. The position of each fork shaft controls the state of each gear set at an engagement state MX, an idling state MZ or a frictional engagement state MY. When the gear set is at the engagement state MX, the gear set is in an engagement with the sleeve of the corresponding synchronizer mechanism. When the gear set is at the frictional engagement state MY, the gear set is not in an engagement with the sleeve but the gear set is in a frictional-engagement with a synchronizer ring. When the gear set is at the idling state MZ, the gear set is not in an engagement with the sleeve and not in a frictional-engagement with the synchronizer ring.

As is explained in Fig. 3B, a time required T1, which is from the operation start time t1 to a frictional engagement state MY start time t2, is obtained (T1=t2-t1). Next, the stroke curve C2 for the unshift operation is moved along the horizontal axis (right-and-left in Fig. 3A) in a manner that the engagement state MX end time matches the frictional engagement state MY start time t2. Here, the stroke position S2 on the stroke curve C2 at the time t1 is a prescribed position. That is, the 1st and 2nd shift stage fork shaft 2 is required to be positioned at S2 at the time point t1.

As described above, once the 1st and 2nd shift stage fork shaft 2 is actuated on the basis of the operating command, an unshift operation of the 1 st and 2nd shift stage fork shaft 2 from the 2nd shift stage is initiated at the time point t3. At the time point t1 where the fork shaft 2 reaches the prescribed position S2, the 3rd and 4th shift stage fork shaft 4 is controlled so as to initiate a shift operation. At and after the time point t1, the unshift operation and the shift operation progress in parallel. At the time point t2, at the same time as the gear set for the 2nd shift stage is released from the engagement state MX in response to the movement of the fork shaft 2 in the unshift direction, the gear set for the 3rd shift stage is controlled to the frictional engagement state MY in response to the movement of the fork shaft in the shift direction. At the time point t4, the 1 st and 2nd shift stage fork shaft 2 reaches the neutral position N. At the time point t5, the fork shaft 4 completely reaches the position V3 for the 3rd shift stage, wherein the gear change operation from the second shift stage to the third shift stage is terminated. Therefore, according to the embodiment of the present invention, double engagement does not occur, in which two shift stages are selected at the same time, and a gear change operation is completed at the minimal time.

Operation times for an unshift operation and a shift operation may fluctuate in the actual operation. This occasionally may cause double engagement due to a short frictional engagement time. However, because a duration time of such double engagement is slight, possible damages, which may influence on the gear set, is tolerated level. In order to prevent such matters, a start time of the shift operation can be delayed by a fluctuation time.

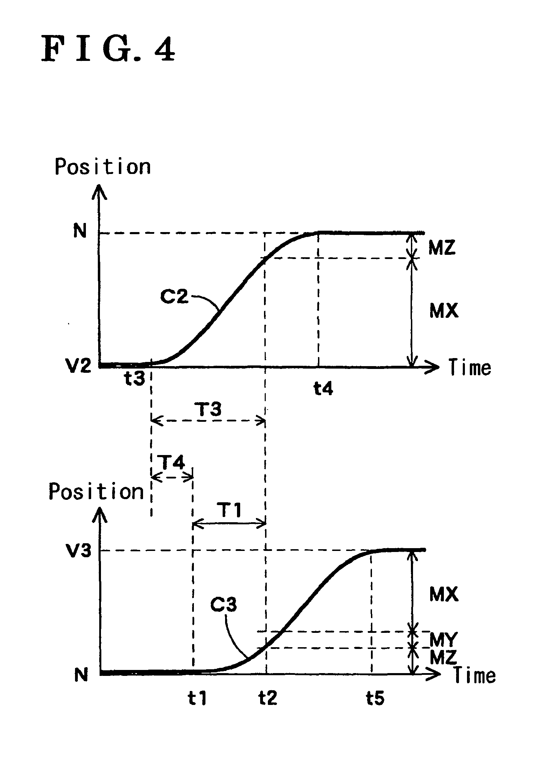

Figs. 4A and 4B explain a method of controlling a gear change operation on the basis of an operation elapsed time. As mentioned in Figs. 3A and 3B, a time required T1, which is from the operation star time t1 to a frictional engagement state MY start time t2, is obtained (T1=t2-t1). Next, the stroke curve C2 for the unshift operation is moved along the horizontal axis (right-and-left in Fig. 4A) in a manner that the engagement state MX end time matches to the frictional engagement state MY start time t2. Then, a time required T3, which is from the operation start time t3 of the stroke curve C2 to the engagement state MX end time t2 is obtained (T3=t2-t3). Here, the time T4, which is a difference between the time T1 and the time T3, is obtained (T4=T3-T1) and is set as a prescribed position.

As described above, once the 1 st and 2nd shift stage fork shaft 2 is actuated on the basis of the operating command, the unshift operation of the 1st and 2nd shift stage fork shaft 2 from the 2nd shift stage is initiated at the time point t3. In the time T4 from the time point t3, i.e., at the time point t1, the shift operation of the fork shaft 4 to the 3rd shift stage is initiated. At and after the time point t1, the unshift operation and the shift operation are controlled at the same timings as Figs. 3A and 3B.

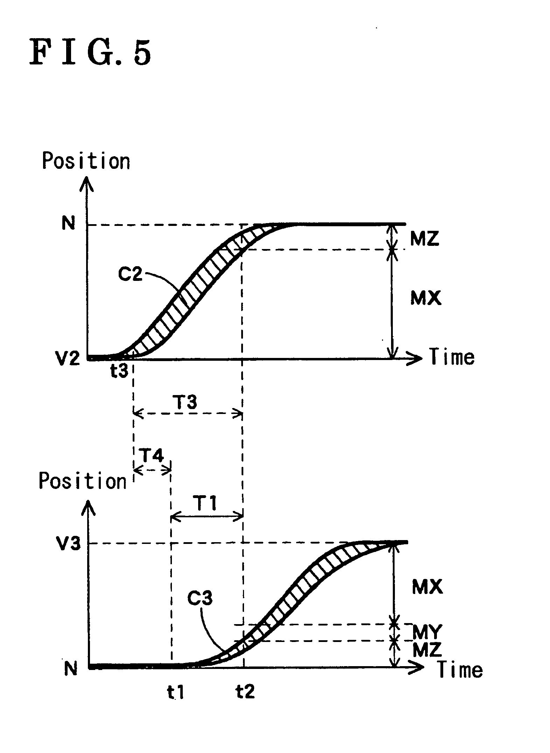

In order to take account of possible fluctuations of an unshift operation and a shift operation during the gear change operation control on the basis of an operation elapsed time, each stroke curve C2 and C3 can be designed to have a range or width as illustrated in Figs. 5A and 5B. Here, assuming that the time T1 is the minimum value of the fluctuation and the time T3 is the maximum value thereof, double engagement does not occur, in which plural gear sets, each of which has a unique gear change ratio, are engaged at the same time.

Further, in order to reduce such fluctuations and to control the gear change operation with high precision, it is possible to employ a method of statistically handling actually measured data. That is, the ECU each time measures the stroke curves C2 and C3 of the actual unshift and shift operations, temperatures or inputs to the actuators related to the gear change operation, and so on, and handles those information statistically. In this case, as the vehicle mileage (traveled distance) is increased and the actually measured data are stored, the number of statistic parameters of distributions based on the actually measured data is increased. Therefore, it is possible to estimate such fluctuations precisely.

Next, described below is a method of controlling a gear change operation with an estimated time required for arrival while detecting an actual progress of the gear change operation, wherein the gear change operation is controlled more precisely.

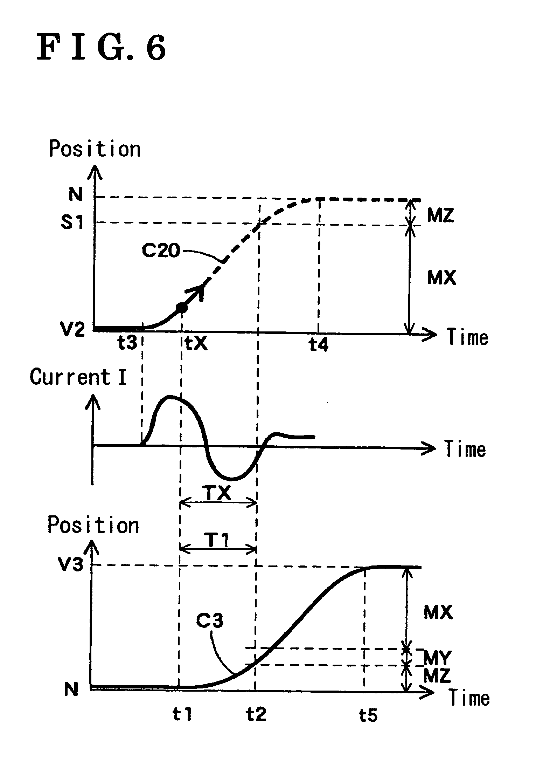

According to the methods of controlling a gear change operation illustrated in Figs. 3A-4B, the same control program is implemented every time on the basis of the prescribed position or the prescribed time, each of which is obtained in advance on the basis of the actually measured data. Meanwhile, according to the method illustrated in Figs. 6A and 6B, after the start of an unshift operation of every gear change operation, a timing to start a shift operation is estimated in real time while obtaining an estimated time required for arriving at a position.

More specifically, according to this method illustrated in Figs. 6A and 6B. the inputs to the actuator of the shift fork 2 for the unshift operation, i.e., an amount of electric current I for a motor is detected. At the time point t3, the unshift operation is started. At the time point tX after the time point t3, the ECU detects the stroke position and the operation speed of the fork shaft 2 for the unshift operation and computes or estimates the stroke curve C20 with reference to an amount of electric current I. The ECU next estimates a time required for the fork shaft 2 to arrive at a stroke position S1 where the gear set for the second shift stage is released from the synchronic engagement state MX. This time is determined as an estimated time required for arrival TX. Here, a time T1 from the start of the shift operation to the start of the frictional engagement (Fig. 6B) is compared with the estimated time required for arrival TX. When the time T1 becomes equal to or greater than the time TX, the shift operation is started.

According to the method of controlling a gear change operation with the estimated time required for arrival TX, it is possible to repeatedly detect and feedback-control in real time even after the start of a shift operation, which leads to further improved control precision. That is, while estimating a time required for the un-shifting fork shaft 2 to arrive the stroke position S1, an identical estimation is applied for the fork shaft 4 for the shift operation. Therefore, the time point t2 is controlled with high control precision. For example, even when the stroke curves C20 and C30 vary for some reasons, the amount of electric current I to be supplied to the motor is controlled to increase or decrease. Therefore, the unshift operation and the shift operation are well associated with each other so as to prevent occurrences of double engagements and to implement a gear change operation at a minimal time.

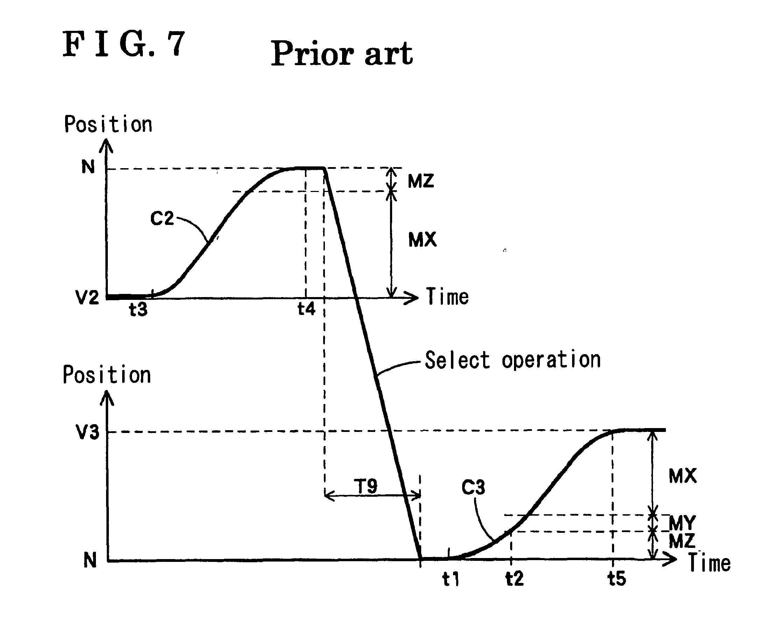

Fig. 7 illustrates a method of controlling a gear change operation in a conventional automated manual transmission. In this case, it takes a time T9 for the inner lever 93 to complete a select operation from a time position t4 where an unshift operation is completed. A shift operation is then started at the time point t1. Therefore, comparing the embodiment of the present invention with the conventional one in Fig. 7, in the embodiment, the unshift operation and the shift operation are implemented in parallel, which leads to time saving in a gear change operation.

As described above, according to the embodiment of the present invention, the above-described effects are produced when plural fork shafts are operated in parallel. Such effects are not produced when a gear change operation is performed only with a single fork shaft. For example, when a gear change operation is performed from the second shift stage to the first shift stage, the fork shaft 2 is moved from the down side in Fig. 1 to the upper side in Fig. 1 through the neutral position N. Therefore, the gear change operation is performed in the same manner as conventional ones. In order to reduce time for all gear change operations, for example a shaft and an actuator is provided every shift stage.

The gearbox described above includes a synchronizer mechanism as an engagement member. However, the engagement member is not limited to such synchronizer mechanism and can be a dog clutch for example.

As described above, according to the embodiment of the present invention, the transmission can establish any of five forward shift stages and a reverse shift stages. However, the transmission can include a gear train for establishing the sixth, seventh or eighth forward shift stage.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the appended claims. Accordingly, it is expressly intended that all such variations, changes and equivalents which fall within the scope of the present invention as defined in the claims, be embraced thereby.

## Claims

1. An automated manual transmission apparatus **characterized in** comprising:
a first shaft (2) selectively operated for an unshift operation or a shift operation of a first shift stage;
a second shaft (4) selectively operated for an unshift operation or a shift operation of a second shift stage;
a first driving means (3) for driving the first shaft (2);
a second driving means (5) for driving the second shaft (4); and
controlling means (ECU) for controlling the first and second driving means (3, 5) simultaneously so that the unshift operation of the first shift stage is performed in parallel with the shift operation of the second shift stage,
**characterized in that** the controlling means obtains an estimated time required for the first shaft to reach a position (S1) based upon a stroke position and an operation speed of the first shaft and input to the actuator during the unshift operation of the first shift stage and initiates the shift operation of the second shift stage when the estimated time required for the first shaft to reach a position (S1) becomes equal to or less than a time required for the shift operation of the second shift stage.

2. An automated manual transmission apparatus according to claim 1, further comprising:
a gearbox in which the first or second shift stage is selectively achieved, the gear box having:
a first gear set having a first drive gear and a first driven gear ;
a second gear set having a second drive gear and a second driven gear;
a first engagement member disengaged from the first drive gear during the unshift operation of the first shift stage so that the first drive gear rotates idly or engaged with the first drive gear during the shift operation of the first shift stage;
a second engagement member disengaged from the second drive gear during the unshift operation of the second shift stage so that the second drive gear rotates idly or engaged with the second drive gear during the shift operation of the second shift stage;
the first shaft (2) being a first fork shaft provided for the first gear set;
the second shaft (4) being a second fork shaft provided for the second gear set;
the first driving means (3) including a first lever (3) and a first actuator for driving the first fork shaft; and
the second driving means (5) including a second lever (5) and a second actuator for driving the second fork shaft.

3. An automated manual transmission apparatus according to claim 1 or 2, wherein the controlling means (ECU) includes an unshift detecting portion detecting a progress of the unshift operation of the first shift stage and/or a shift detecting portion detecting a progress of the shift operation of the second shift stage.

4. An automated manual transmission apparatus according to claim 3, wherein the progress of the unshift operation of the first shift stage and the progress of the shift operation of the second shift stage are each detected by monitoring an operation elapsed time; a shaft stroke position; a shaft moving speed; an estimated time for each shaft to reach a predetermined position; an input to each actuator; or a combination thereof.

5. An automated manual transmission apparatus according to claim 3 or 4, wherein the controlling means (ECU) refers to the progress of the unshift operation and refers to the progress of the shift operation as needed, the controlling means commencing the shift operation at a time (t1) prior to a time (t2) at which the first gear set turns to an idling state.

6. An automated manual transmission apparatus according to claim 5, wherein the controlling means initiates the shift operation of the second shift stage when the stroke position of the first shaft for the first shift stage reaches a prescribed position.

7. An automated manual transmission apparatus according to claim 5, wherein the controlling means initiates the shift operation of the second shift stage when the operation elapsed time for the unshift operation of the first shift stage reaches a prescribed time (T4).

8. An automated manual transmission apparatus according to any of claims 3-7, further comprising means for detecting a temperature relevant to a gear change operation, and wherein the controlling means includes means for varying the estimated time for the first shaft to reach its position (S1) in response to the detected temperature.

9. An automated manual transmission apparatus according to claim 8, wherein the temperature is any of an engine coolant temperature; an engine room ambient temperature and a transmission inside temperature.

10. An automated manual transmission apparatus according to any of claims 3-9, wherein the controlling means refers to the progress of each operation at or after the start of the shift operation and feedback-controls the driving means.

11. An automated manual transmission apparatus according to any of claims 3-10, wherein the controlling means computes statistically the progresses of the unshift operation and the shift operation and estimates fluctuations in times required for the unshift operation and the shift operation.

## Patentansprüche

1. Automatisierte manuelle Getriebevorrichtung, die Folgendes aufweist:
eine erste Welle (2), die wahlweise für einen Herausschaltvorgang oder einen Einschaltvorgang einer ersten Schaltstufe betätigt wird;
eine zweite Welle (4), die wahlweise für einen Herausschaltvorgang oder einen Einschaltvorgang einer zweiten Schaltstufe betätigt wird;
eine erste Antriebseinrichtung (3) zum Antreiben der ersten Welle (2);
eine zweite Antriebseinrichtung (5) zum Antreiben der zweiten Welle (4); und
eine Steuereinrichtung (ECU) zum Steuern der ersten und zweiten Antriebseinrichtung (3, 5) gleichzeitig derart, dass der Herausschaltvorgang der ersten Schaltstufe parallel zu dem Einschaltvorgang der zweiten Schaltstufe ausgeführt wird,
**dadurch gekennzeichnet, dass** die Steuereinrichtung eine Abschätzzeit, die erforderlich ist, damit die erste Welle eine Position (S1) erreicht, auf der Grundlage einer Hubposition und einer Betriebsgeschwindigkeit der ersten Welle erlangt und zu dem Aktuator während des Herausschaltvorgangs der ersten Schaltstufe eingibt und den Einschaltvorgang der zweiten Schaltstufe herbeiführt, wenn die Abschätzzeit, die erforderlich ist, damit die erste Welle eine Position (S1) erreicht, gleich wie oder geringer als eine Zeitspanne wird, die für den Einschaltvorgang der zweiten Schaltstufe erforderlich ist.

2. Automatisierte manuelle Getriebevorrichtung gemäß Anspruch 1, die des Weiteren Folgendes aufweist:
einen Getriebekasten, in dem die erste oder zweite Schaltstufe wahlweise erreicht wird, wobei der Getriebekasten Folgendes aufweist:
einen ersten Zahnradsatz mit einem ersten Antriebszahnrad und einem ersten angetriebenen Zahnrad;
einen zweiten Zahnradsatz mit einem zweiten Antriebszahnrad und einem zweiten angetriebenen Zahnrad;
ein erstes Eingriffselement, das von dem ersten Antriebszahnrad während des Herausschaltvorgangs der ersten Schaltstufe so außer Eingriff gelangt, dass das erste Antriebszahnrad im Leerlauf dreht oder mit dem ersten Antriebszahnrad während des Einschaltvorgangs der ersten Schaltstufe in Eingriff gelangt;
ein zweites Eingriffselement, das von dem zweiten Antriebszahnrad während des Herausschaltvorgangs der zweiten Schaltstufe so außer Eingriff gelangt, dass das zweite Antriebszahnrad im Leerlauf dreht oder mit dem zweiten Antriebszahnrad während des Einschaltvorgangs der zweiten Schaltstufe in Eingriff gelangt;
wobei die erste Welle (2) eine erste Gabelwelle ist, die für den ersten Zahnradsatz vorgesehen ist;
wobei die zweite Welle (4) eine zweite Gabelwelle ist, die für den zweiten Zahnradsatz vorgesehen ist;
wobei die erste Antriebseinrichtung (3), einen ersten Hebel (3) und einen ersten Aktuator zum Antreiben der ersten Gabelwelle hat; und
die zweite Antriebseinrichtung (5) einen zweiten Hebel (5) und einen zweiten Aktuator zum Antreiben der zweiten Gabelwelle hat.

3. Automatisierte manuelle Getriebevorrichtung gemäß Anspruch 1 oder 2, wobei die Steuereinrichtung (ECU) einen Herausschalterfassungsabschnitt, der ein Voranschreiten des Herausschaltvorgangs der ersten Schaltstufe erfasst, und/oder einen Einschalterfassungsabschnitt aufweist, der ein Voranschreiten des Einschaltvorgangs der zweiten Schaltstufe erfasst.

4. Automatisierte manuelle Getriebevorrichtung gemäß Anspruch 3, wobei das Voranschreiten des Herausschaltvorgangs der ersten Schaltstufe und das Voranschreiten des Einschaltvorgangs der zweiten Schaltstufe jeweils erfasst werden, indem eine verstrichene Betätigungszeit, eine Wellenhubposition, eine Wellenbewegungsgeschwindigkeit, eine Abschätzzeit für jede Welle zum Erreichen einer vorbestimmten Position, eine Eingabe zu jedem Aktuator oder eine Kombination aus diesen überwacht wird.

5. Automatisierte manuelle Getriebevorrichtung gemäß Anspruch 3 oder 4, wobei die Steuereinrichtung (ECU) je nach Bedarf auf das Voranschreiten des Herausschaltvorgangs Bezug nimmt und auf das Voranschreiten des Einschaltvorgangs Bezug nimmt, wobei die Steuereinrichtung den Einschaltvorgang bei einem Zeitpunkt (t1) vor einem Zeitpunkt (t2) beginnt., bei dem der erste Zahnradsatz in einen Leerlaufzustand gelangt.

6. Automatisierte manuelle Getriebevorrichtung gemäß Anspruch 5, wobei die Steuereinrichtung den Einschaltvorgang der zweiten Schaltstufe herbeiführt, wenn die Hubposition der ersten Welle für die erste Schaltstufe eine vorgeschriebene Position erreicht.

7. Automatisierte manuelle Getriebevorrichtung gemäß Anspruch 5, wobei die Steuereinrichtung den Einschaltvorgang der zweiten Schaltstufe herbeiführt, wenn die verstrichene Betätigungszeit für den Herausschaltvorgang der ersten Schaltstufe eine vorgeschriebene Zeitspanne (T4) erreicht.

8. Automatisierte manuelle Getriebevorrichtung gemäß einem der Ansprüche 3 bis 7, die des Weiteren eine Einrichtung zum Erfassen einer Temperatur, die für den Gangwechselvorgang relevant ist, aufweist, und wobei die Steuereinrichtung eine Einrichtung zum Variieren der Abschätzzeit für die erste Welle zum Erreichen ihrer Position (S1) im Ansprechen auf die erfasste Temperatur hat.

9. Automatisierte manuelle Getriebevorrichtung gemäß Anspruch 8, wobei die Temperatur eine beliebige Temperatur aus einer Verbrennungsmotorkühlmitteltemperatur, einer Verbrennungsmotorraumumgebungstemperatur oder einer Getriebeinnentemperatur ist.

10. Automatisierte manuelle Getriebevorrichtung gemäß einem der Ansprüche 3 bis 9, wobei die Steuereinrichtung auf das Voranschreiten jeder Betätigung bei oder nach dem Start des Einschaltvorgangs Bezug nimmt und die Antriebseinrichtung per Rückführung steuert.

11. Automatisierte manuelle Getriebevorrichtung gemäß einem der Ansprüche 3 bis 10, wobei die Steuereinrichtung statistisch das Voranschreiten des Herausschaltvorgangs und das Voranschreiten des Einschaltvorgangs berechnet und Schwankungen im Hinblick auf die Zeiten, die für den Herausschaltvorgang und den Einschaltvorgang erforderlich sind, abschätzt.

## Revendications

1. Appareil de transmission manuelle automatisée **caractérisé en ce qu'**il comprend :
un premier arbre (2) actionné sélectivement pour une opération de dégagement ou une opération de changement de vitesse d'un premier étage de changement de vitesse ;
un deuxième arbre (4) actionné sélectivement pour une opération de dégagement ou une opération de changement de vitesse d'un deuxième étage de changement de vitesse ;
un premier moyen d'entraînement (3) destiné à entraîner le premier arbre (2) ;
un deuxième moyen d'entraînement (5) destiné à entraîner le deuxième arbre (4) ; et
un moyen de commande (UCE) destiné à commander les premier et deuxième moyens d'entraînement (3, 5) simultanément, de sorte que l'opération de dégagement du premier étage de changement de vitesse soit réalisée parallèlement à l'opération de changement de vitesse du deuxième étage de changement de vitesse,
**caractérisé en ce que** le moyen de commande obtient un délai estimé requis pour que le premier arbre arrive à une position (S1) sur la base d'une position de course et d'une vitesse de fonctionnement du premier arbre et d'une entrée à l'actionneur pendant l'opération de dégagement du premier étage de changement de vitesse et lance l'opération de changement de vitesse du deuxième étage de changement de vitesse lorsque le délai estimé requis pour que le premier arbre arrive à une position (S1) devient inférieur ou égal à un délai requis pour l'opération de changement de vitesse du deuxième étage de changement de vitesse.

2. Appareil de transmission manuelle automatisée selon la revendication 1, comprenant en outre :
une boîte de vitesses dans laquelle le premier ou le deuxième étage de changement de vitesse est sélectivement réalisé, la boîte de vitesses ayant :
un premier train d'engrenages ayant un premier engrenage d'entraînement et un premier engrenage mené ;
un deuxième train d'engrenages ayant un deuxième engrenage d'entraînement et un deuxième engrenage mené ;
un premier élément d'engagement désengagé du premier engrenage d'entraînement pendant l'opération de dégagement du premier étage de changement de vitesse de sorte que le premier engrenage d'entraînement tourne au ralenti ou engagé avec le premier engrenage d'entraînement pendant l'opération de changement de vitesse du premier étage de changement de vitesse ;
un deuxième élément d'engagement désengagé du deuxième engrenage d'entraînement pendant l'opération de dégagement du deuxième étage de changement de vitesse de sorte que le deuxième engrenage d'entraînement tourne au ralenti ou engagé avec le deuxième engrenage d'entraînement pendant l'opération de changement de vitesse du deuxième étage de changement de vitesse ;
le premier arbre (2) étant un premier arbre à fourche prévu pour le premier train d'engrenages ;
le deuxième arbre (4) étant un deuxième arbre à fourche prévu pour le deuxième train d'engrenages ;
le premier moyen d'entraînement (3) comportant un premier levier (3) et un premier actionneur pour entraîner le premier arbre à fourche ; et
le deuxième moyen d'entraînement (5) comportant un deuxième levier (5) et un deuxième actionneur pour entraîner le deuxième arbre à fourche.

3. Appareil de transmission manuelle automatisée selon la revendication 1 ou 2, dans lequel le moyen de commande (UCE) comporte une partie de détection de dégagement détectant une progression de l'opération de dégagement du premier étage de changement de vitesse et/ou une partie de détection de changement de vitesse détectant une progression de l'opération de changement de vitesse du deuxième étage de changement de vitesse.

4. Appareil de transmission manuelle automatisée selon la revendication 3, dans lequel la progression de l'opération de dégagement du premier étage de changement de vitesse et la progression de l'opération de changement de vitesse du deuxième étage de changement de vitesse sont chacune détectée en surveillant le délai écoulé d'une opération ; une position de course de l'arbre ; une vitesse de déplacement de l'arbre ; un délai estimé pour que chaque arbre arrive à une position prédéterminée, une entrée à chaque actionneur ; ou leur combinaison.

5. Appareil de transmission manuelle automatisée selon la revendication 3 ou 4, dans lequel le moyen de commande (UCE) se réfère à la progression de l'opération de dégagement et se réfère à la progression de l'opération de changement de vitesse selon les besoins, le moyen de commande commençant l'opération de changement de vitesse à un temps (t1) avant un temps (t2) auquel le premier train d'engrenages tourne dans un état de ralenti.

6. Appareil de transmission manuelle automatisée selon la revendication 5, dans lequel le moyen de commande lance l'opération de changement de vitesse du deuxième étage de changement de vitesse lorsque la position de course du premier arbre pour le premier étage de changement de vitesse arrive à une position prescrite.

7. Appareil de transmission manuelle automatisée selon la revendication 5, dans lequel le moyen de commande lance l'opération de changement de vitesse du deuxième étage de changement de vitesse lorsque le délai écoulé pour l'opération de dégagement du premier étage de changement de vitesse atteint un délai prescrit (T4).

8. Appareil de transmission manuelle automatisée selon l'une des revendications 3-7, comprenant en outre un moyen pour détecter une température relative à une opération de changement de vitesse, et dans lequel le moyen de commande comporte un moyen permettant de faire varier le délai estimé pour que le premier arbre arrive à sa position (S1) en réponse à la température détectée.

9. Appareil de transmission manuelle automatisée selon la revendication 8, dans lequel la température est l'une d'une température de refroidissement du moteur, d'une température ambiante d'un compartiment moteur et d'une température intérieure de la transmission.

10. Appareil de transmission manuelle automatisée selon l'une des revendications 3-9, dans lequel le moyen de commande se rapporte à la progression de chaque opération au moment ou après le début de l'opération de changement de vitesse et asservit le moyen d'entraînement.

11. Appareil de transmission manuelle automatisée selon l'une des revendications 3-10, dans lequel le moyen de commande calcule statistiquement les progressions de l'opération de dégagement et l'opération de changement de vitesse et estime les fluctuations dans les délais requis pour l'opération de dégagement et l'opération de changement de vitesse.
